# EUROPÄISCHE PATENTSCHRIFT

(11) **EP 2 896 446 B1**
(45) Veröffentlichungstag und Bekanntmachung des Hinweises auf die Patenterteilung: **07.03.2018**
(21) Anmeldenummer: 14151807.6
(22) Anmeldetag: 20.01.2014
(51) Int. Cl.: B01D 53/14, B01D 53/78, F26B 25/00, B05B 15/12

(54) **Anordnung und Verfahren zur Reinigung von Gasströmen einer Lackieranlage**
Method and device for cleaning gas flows of a painting plant
Dispositif et procédé de nettoyage de flux de gaz d'une unité de laquage

(43) Veröffentlichungstag der Anmeldung: 22.07.2015
(73) Patentinhaber: AWS Group AG, 74076 Heilbronn (DE)
(72) Erfinder: Enzenhofer, Matthias, 75397 Simmozheim (DE); Pfutterer, Matthias, 74076 Heilbronn (DE)
(74) Vertreter: Maikowski & Ninnemann Patentanwälte Partnerschaft mbB

(56) Entgegenhaltungen:
- DE-U1-202010 006 567
- DE-U1-202011 104 983
- FR-A1- 2 974 363

## Beschreibung

Die vorliegende Erfindung betrifft eine Anordnung und ein Verfahren zur Reinigung von Gasströmen einer Lackieranlage.

Heute ist die in Spritzkabinen für beispielsweise Karosserien in der Automobilindustrie anfallende Abluft durch die Verwendung von wasserbasierten Lacken und optimierten Lackierprozessen bereits relativ gering mit flüchtigen organischen Verbindungen belastet. Aufgrund europäischer als auch nationaler Emissionsrichtlinien für die maximale Schadstoffbelastung von Abluft solcher Lackieranlagen sind in der Regel dennoch Abgasreinigungsverfahren notwendig, um die teils strengen Grenzwerte einzuhalten. Die einzelnen Abluftströme einer solchen Lackieranlage sind dabei üblicherweise nicht ausreichend mit Schadstoffen belastet, um eine betriebswirtschaftlich sinnvolle Abluftreinigung durchzuführen. Es ist deshalb üblicherweise notwendig, die Abluftströme aufzukonzentrieren, um sie anschließend mit möglichst geringem Brennstoffeinsatz thermisch zu behandeln.

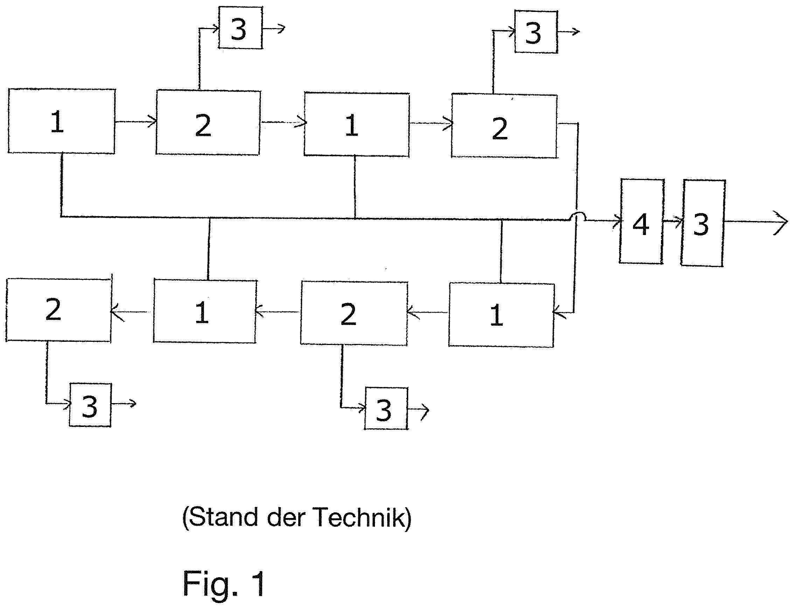

Die Figur 1 zeigt eine gewöhnliche Lackieranlage zur Aufbringung verschiedener Lackschichten beispielsweise auf eine Karosserie in der Automobilproduktion. Den einzelnen Lackiereinheiten 1 ist dabei jeweils eine Trocknungseinheit 2 nachgeschaltet. Die hoch belastete Abluft einer jeden Trocknungseinheit 2 wird dabei in einer nachgeschalteten thermischen Behandlungsvorrichtung 3 durch thermische Behandlung, d. h. Oxidation, gereinigt. Jede der thermischen Behandlungsvorrichtungen muss dabei für die thermische Behandlung der Abluftströme mit Brennstoff, z. B. Erdgas, versorgt werden. Die Abwärme der thermischen Behandlungsvorrichtung 3 kann wiederum für das Beheizen der Trocknungseinheit 2 verwendet werden, um einen möglichst energieeffizienten Betrieb zu ermöglichen.

Die Abluft der einzelnen Lackiereinheiten 1 ist dabei jedoch zu schwach mit beispielsweise flüchtigen organischen Verbindungen belastet, um unmittelbar thermisch behandelt zu werden. Die Abluftströme werden deshalb einem Adsorptionsrad 4 zugeführt, um dort aufkonzentriert zu werden. Das Adsorptionsrad besteht aus konzentrisch um eine Achse angeordneten Kammern, die ein Adsorptionsmaterial wie beispielsweise Aktivkohle enthalten. Die mit Schadstoffen beladene Abluft wird von oben über das Adsorptionsmaterial geführt und in der Abluft enthaltene Schadstoffmoleküle lagern sich an der Aktivkohle an. In einem abgeschotteten Teilbereich des sich drehenden Rades findet die Desorption statt. Dabei wird Heißluft im Gegenstrom über das Adsorptionsmaterial geführt und die angelagerten Schadstoffe werden so wieder aus dem Adsorptionsmaterial ausgetrieben. Damit kann ein stark mit Schadstoffen belasteter Desorptionsstrom erzeugt werden, der in einem weiteren Prozessschritt wiederum einer thermischen Behandlungsvorrichtung 3 zugeführt werden kann, um diesen möglichst energieeffizient zu reinigen.

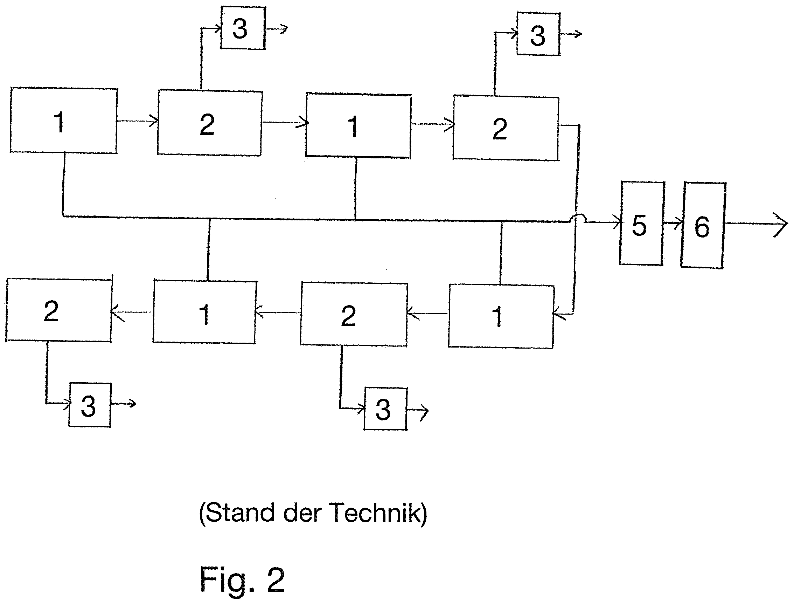

In der Figur 2 ist ein alternatives Reinigungsverfahren nach dem Stand der Technik gezeigt. Dabei werden wiederum die Abluftströme der einzelnen Trocknungseinheiten 2 mittels jeweils nachgeschalteter thermischer Behandlungsvorrichtung 3 thermisch behandelt. Im Gegensatz zum Verfahren der Figur 1 werden im Verfahren der Figur 2 die Abluftströme der einzelnen Lackiereinheiten 1 einer Absorptionsvorrichtung 5 zugeführt, in der die in der Abluft enthaltenen Schadstoffe durch eine Flüssigkeit absorbiert werden und der Abluftstrom somit gereinigt wird. In einem weiteren Schritt wird die mit beispielsweise flüchtigen organischen Verbindungen versetzte Flüssigkeit der Absorptionsvorrichtung einer Desorptionsvorrichtung 6 zugeführt, um die einzelnen Stoffe durch Desorption und anschließende Kondensation aus der Flüssigkeit zurückzugewinnen und diese in weiteren Schritten beispielsweise aufzubereiten, um sie erneut zu verwenden.

Nachteilig an den vorgehend beschriebenen Verfahren nach dem Stand der Technik sind zum einen die anfallenden Betriebsmittelkosten als auch der hohe Energieverbrauch der Reinigungsanlagen. Es ist daher Aufgabe der Erfindung, eine Anordnung und ein Verfahren zur Reinigung von Gasströmen von Lackieranlagen vorzusehen, die eine energieeffizientere und somit auch betriebswirtschaftlich günstigere Abluftreinigung ermöglichen.

Gemäß einem ersten Aspekt der Erfindung wird ein Verfahren zur Reinigung von Gasströmen einer Lackieranlage gemäß Anspruch 1 vorgeschlagen.

Bevorzugt wird die Flüssigkeit nach dem Abtrennen der gelösten Bestandteile wieder der Absorptidie Flüssigkeit nach dem Abtrennen der gelösten Bestandteile wieder der Absorptionsvorrichtung zugeführt.

Mit dem erfindungsgemäßen Verfahren kann ein Gasstrom, der beispielsweise ein mit flüchtigen organischen Verbindungen belasteter Abluftstrom einer Lackierkabine in einer Lackieranlage sein kann, energieeffizient und unter Einsatz geringer Betriebsmittelkosten gereinigt werden. Durch die nacheinander ausgeführten Schritte der Absorption und der Desorption kann der zunächst schwach belastete Gasstrom auf effiziente Weise aufkonzentriert werden, um anschließend einer thermischen Behandlung zugeführt zu werden. Durch die Möglichkeit der räumlichen Trennung von Absorption und Desorption ist zudem eine größtmögliche räumliche Flexibilität hinsichtlich der Realisierung einer Anordnung zur Anwendung des erfindungsgemäßen Verfahrens gegeben.

In einem zweiten Aspekt der Erfindung ist daher eine Anordnung zur Reinigung von Gasströmen einer Lackieranlage gemäß Anspruch 4 vorgesehen.

Gasströme der zumindest einen Lackiereinheit werden in die Absorptionsvorrichtung eingeleitet zumindest einen Lackiereinheit werden in die Absorptionsvorrichtung eingeleitet und flüchtige Bestandteile der Gasströme werden mittels Lösen in einer Flüssigkeit abgetrennt. In der Flüssigkeit gelöste Bestandteile werden in der zumindest einen Desorptionsvorrichtung von der Flüssigkeit abgetrennt und der zumindest einen thermischen Behandlungsvorrichtung zugeführt. Bevorzugt wird die Flüssigkeit nach dem Abtrennen der gelösten Bestandteile wieder der Absorptionsvorrichtung zugeführt.

In einer bevorzugten Ausführungsform weist die Absorptionsvorrichtung zumindest Folgendes auf: eine Trägeranordnung mit einer Zufuhr und einem Auslass für die Flüssigkeit, wobei die Trägeranordnung derart gestaltet ist, dass die Flüssigkeit zwischen Zufuhr und Auslass über eine Anzahl an Trägern geleitet wird und auf der Oberfläche der Träger einen fließenden Flüssigkeitsfilm bildet; und eine Gasstromführung, die derart gestaltet ist, dass die Gasströme mit dem fließenden Flüssigkeitsfilm auf der Oberfläche der Anzahl an Trägern in Kontakt kommen. Weiterhin weist die Desorptionsvorrichtung zumindest Folgendes auf: eine Heizanordnung, um die Flüssigkeit und einen weiteren Gasstrom auf eine erste Temperatur zu erhitzen; eine Kolonne, um die erhitzte Flüssigkeit mit dem erhitzten weiteren Gasstrom zu kontaktieren; und Mittel, um die erhitzte Flüssigkeit zu kühlen.

Der weitere Gasstrom ist dabei bevorzugt ein Teilstrom des Gasstroms von der zumindest einen Trocknungseinheit zu der thermischen Behandlungsvorrichtung. Alternativ kann der Gasstrom auch ein Gasstrom einer Abhitzestrecke der zumindest einen thermischen Behandlungsvorrichtung sein.

Die aus der Flüssigkeit abgetrennten Bestandteile können einer einzigen thermischen Behandlungsvorrichtung zugeführt werden. Bevorzugt werden die aus der Flüssigkeit abgetrennten Bestandteile jeweils einer der Desorptionsvorrichtung zugeordneten thermischen Behandlungsvorrichtung zugeführt.

Mit der vorgeschlagenen Anordnung zur Reinigung lassen sich Gasströme, wie beispielsweise mit flüchtigen organischen Verbindungen belastete Abluftströme einer Lackieranlage, effizient reinigen. Der nur schwach belastete Abluftstrom einer Lackiereinheit wird einer Absorptionsvorrichtung zugeführt, um im Gasstrom enthaltene Bestandteile mittels einer Flüssigkeit abzutrennen und den Gasstrom somit zu reinigen. Die nunmehr in der Flüssigkeit gelösten Bestandteile werden in einem weiteren Schritt in einer Desorptionsvorrichtung von der Flüssigkeit abgetrennt und können somit effektiv aufkonzentriert werden. Die nunmehr hoch belasteten Gasströme werden einer thermischen Behandlungsvorrichtung zugeführt, um mit den Abluftströmen der Trocknungseinheiten thermisch behandelt zu werden.

Ein Vorteil der erfindungsgemäßen Anordnung liegt darin, dass die Absorption und die Desorption räumlich getrennt voneinander möglich sind. Die Abluft der einzelnen Lackiereinheiten kann zentral in einer Absorptionsvorrichtung gereinigt werden und die nunmehr belastete Flüssigkeit kann über Rohrleitungen einer oder mehrerer Desorptionsvorrichtungen, die beispielsweise in räumlicher Nähe zu thermischen Behandlungsvorrichtungen der Lackieranlage angeordnet sein können, zugeführt werden. Verglichen mit den Reinigungsanordnungen nach dem Stand der Technik kann die erfindungsgemäße Anordnung einfach in bereits bestehende Lackieranlagen nachgerüstet werden, da die einzelnen Desorptionsvorrichtungen räumlich kompakt realisiert werden können und zwischen der Absorptionsvorrichtung und den einzelnen Desorptionsvorrichtungen nur dünne Rohrleitungen verlegt werden müssen im Vergleich zu aufwändig isolierten lüftungstechnischen Rohrleitungen, die in Reinigungsanlagen nach dem Stand der Technik installiert werden müssen.

Ein weiterer Vorteil der erfindungsgemäßen Anordnung liegt darin, dass die Desorptionsvorrichtungen in räumlicher Nähe zu den thermischen Behandlungsvorrichtungen einzelner Trocknungseinheiten installiert werden können und die hoch konzentrierten Gasströme aus den Desorptionsvorrichtungen den einzelnen thermischen Behandlungsvorrichtungen zugeführt werden können, um dort thermisch behandelt zu werden. Die thermischen Behandlungsvorrichtungen der einzelnen Trocknungseinheiten sind üblicherweise so ausgelegt, dass sie 10 bis 20 % höhere Volumenströme, verglichen mit dem regulären Betrieb, behandeln können. Durch die Anordnung der Desorptionsvorrichtungen in räumliche Nähe zu den thermischen Behandlungsvorrichtungen kann das freie Behandlungspotential genutzt werden und die Abluftströme der einzelnen Lackiereinheiten können ohne Vorsehung zusätzlicher thermischer Behandlungsvorrichtungen mit den bereits vorhandenen thermischen Behandlungsvorrichtungen der Trocknungseinheiten thermisch behandelt werden. Es ist somit eine äußerst energieeffiziente Abluftreinigung unter Einsatz geringer Betriebsmittel möglich. Zudem lässt sich die Anordnung aufgrund der räumlichen Trennung von Absorption und Desorption leicht in bereits bestehende Lackieranlagen nachrüsten.

Im Folgenden wird die Erfindung unter Bezugnahme auf die beiliegenden Zeichnungen näher erläutert. Dabei bezeichnen gleiche Bezugszeichen gleiche oder gleichwirkende Elemente.

Es zeigen:
- Fig. 1: eine Anordnung zur Reinigung von Gasströmen einer Lackieranlage nach dem Stand der Technik;
- Fig. 2: eine weitere Anordnung von Gasströmen einer Lackieranlage nach dem Stand der Technik;
- Fig. 3: eine erfindungsgemäße Anordnung zur Reinigung von Gasströmen einer Lackieranlage; und
- Fig. 4: eine schematische Darstellung einer erfindungsgemäßen Desorptionsvorrichtung.

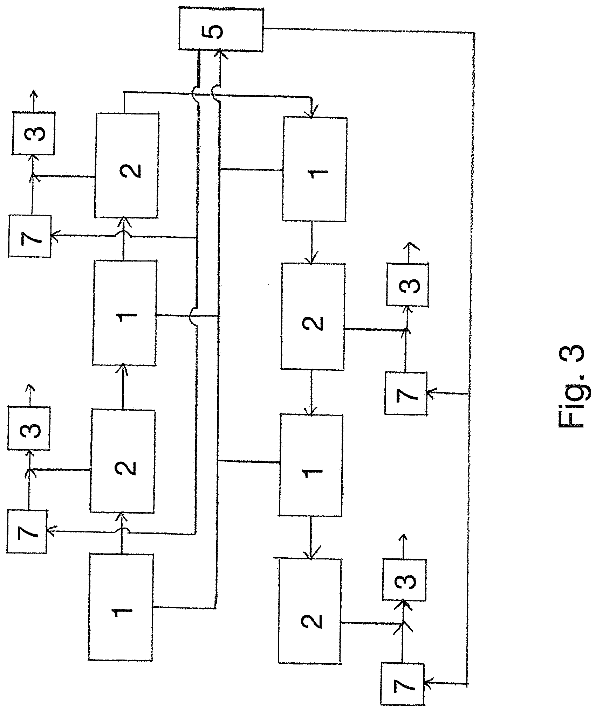

Die Figur 3 zeigt wiederum eine Lackieranlage mit Lackiereinheiten 1, Trocknungseinheiten 2 sowie den Trocknungseinheiten 2 nachgeschaltete thermische Behandlungsvorrichtungen 3 zur thermischen Behandlung von Abluftströmen der Trocknungseinheiten 2. Im Weiteren zeigt die Figur 3 eine Absorptionsvorrichtung 5, welcher die Abluftströme der Lackiereinheiten 1 zugeführt werden. Die Abluftströme aus den Lackiereinheiten 1 sind mit Schadstoffen, die beispielsweise flüchtige organische Verbindungen sein können, belastet. Jedoch sind die Abluftströme aus den Lackiereinheiten 1 zu gering mit Schadstoffen belastet, um die Abluftströme betriebswirtschaftliche sinnvoll unmittelbar mittels thermischer Behandlung zu reinigen.

Die in die Absorptionsvorrichtung 5 eingeleiteten Abluftströme werden dort mittels einer schwerflüchtigen Flüssigkeit von den in dem Abluftstrom enthaltenen Schadstoffen befreit. Als Flüssigkeit kann eine jede Flüssigkeit dienen, die die zu entfernenden Schadstoffe absorbieren und wieder abgeben (desorbieren) kann. Geeignete Flüssigkeiten sind beispielsweise Wasser, Mischungen aus Wasser und zumindest einem Glykol und insbesondere Polyethylenglykoldialkylether.

Die Absorptionsvorrichtung weist eine Trägeranordnung mit einer Zufuhr und einem Auslass für die Flüssigkeit auf, wobei die Trägeranordnung derart gestaltet ist, dass die Flüssigkeit zwischen Zufuhr und Auslass über eine Anzahl an Trägern geleitet wird und auf der Oberfläche einen fließenden Flüssigkeitsfilm bildet. Die Absorptionsvorrichtung weist weiterhin eine Gasstromführung auf, die derart gestaltet ist, dass der Abluftstrom mit dem fließenden Flüssigkeitsfilm auf der Oberfläche der Anzahl an Trägern in Kontakt kommt. Durch den Kontakt des Abluftstroms mit dem fließenden Flüssigkeitsfilm auf der Oberfläche der Anzahl an Trägern kann der fließende Flüssigkeitsfilm Schadstoffe aus dem Abluftstrom absorbieren und diese somit effektiv aus dem Abluftstrom entfernen, um diesen soweit zu reinigen, dass er den Erfordernissen sowohl beispielsweise europäischer als auch anderweitiger regionaler Emissionsrichtlinien entspricht. Der nunmehr gereinigte Abluftstrom kann in die Umwelt abgegeben werden.

Als Träger können beispielsweise Profile, Schläuche oder Rohre verwendet werden, insbesondere gewirkte Kunststoffschläuche, die bevorzugt aus Thermoplasten, wie etwa Polyester, Polyamid, Polyethylen oder Polypropylen bestehen. Dabei ist besonders Polyester für die gewirkten Kunststoffschläuche geeignet. Die gewirkten Kunststoffschläuche können aus einem oder mehreren Filamenten gebildet sein, bevorzugt aus mehreren Filamenten. Die gewirkten Kunststoffschläuche werden durch eine thermische Behandlung wie etwa teilweisem Zusammenschmelzen oder Zusammensintern der Filamente, ggf. unter Schrumpfung, mechanisch stabiler gemacht. Die so behandelten Kunststoffschläuche sind formstabiler und zeigen eine gewisse Eigensteifigkeit und Biegeelastizität. Sie bleiben dabei aber porös, so dass es im Betrieb der Vorrichtung zu einem vorteilhaften Flüssigkeitsaustausch zwischen der Innenseite und der Außenseite der gewirkten Kunststoffschläuche kommt, der sowohl die Fließgeschwindigkeit des Flüssigkeitsfilms verringert als auch eine gute Durchmischung der Flüssigkeit und eine Selbstreinigung des Trägers bewirkt.

Eine Anzahl an Trägern kann beispielsweise parallel zueinander mit gleichem oder variierendem Abstand nebeneinander in einer geraden oder gekrümmten Reihe angeordnet werden. Mehrere Reihen, beispielsweise 10 bis 20, können hintereinander oder auch seitlich versetzt, bevorzugt auf Lücke versetzt, parallel zueinander angeordnet werden. Der Gasstrom wird bevorzugt senkrecht zu diesen Reihen, also im Kreuzstrom geführt, so dass der Flüssigkeitsfilm auf der Oberfläche der Träger möglichst vollständig von dem Gasstrom kontaktiert wird. Die Geschwindigkeit des Gasstroms ist dabei derart gewählt, dass eine Erzeugung und Mitnahme von Flüssigkeitströpfchen vermieden wird.

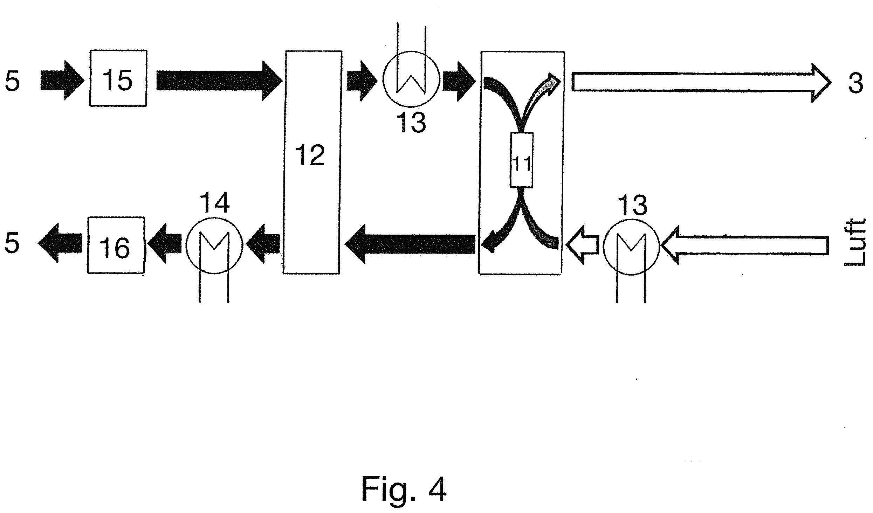

Die mit Schadstoffen versetzte Flüssigkeit der Absorptionsvorrichtung 5 wird in einem weiteren Schritt einer Desorptionsvorrichtung 7 zugeführt. Eine solche Desorptionsvorrichtung 7 ist in der Figur 4 schematisch dargestellt. Die aus der Absorptionsvorrichtung 5 zugeführte Flüssigkeit wird zunächst in einem Prozesstank 15 gesammelt und anschließend über eine Anordnung zweier Wärmetauscher 12, 13 erhitzt und in eine Kolonne 11 geleitet. Ebenso wird Prozessluft, die beispielsweise ein Teilstrom des Abluftstroms einer Trocknungseinheit 2 oder vorgewärmte Frischluft aus der Abhitzestrecke einer thermischen Behandlungsvorrichtung 3 sein kann, über einen Wärmetauscher 13 erhitzt und in die Kolonne 11 eingeleitet. In der Kolonne gehen die in der Flüssigkeit gelösten Schadstoffe aufgrund der Temperatur in die gasförmige Phase über und können von der Prozessluft aufgenommen werden. Es findet somit ein Übergang der Schadstoffe von der Flüssigkeit in die Prozessluft statt. Im Weiteren wird die nunmehr gereinigte Flüssigkeit über Wärmetauscher 12, 14 soweit abgekühlt, dass sie in einem Prozesstank 16 gesammelt werden kann und der Absorptionsvorrichtung 5 wieder zugeführt werden kann. Die nunmehr stark mit Schadstoffen belastete Prozessluft wird im Weiteren einer thermischen Behandlungsvorrichtung 3 zugeführt.

In einer bevorzugten Ausführungsform kann die mit Schadstoffen versetzte Flüssigkeit durch den ersten Wärmetauscher 12 zunächst von ca. 25°C auf ca. 100°C erhitzt werden und durch den weiteren Wärmetauscher 13 auf eine Temperatur von ca. 120°C. Ebenso wird die Prozessluft auf ca. 120°C durch einen Wärmetauscher 13 erhitzt. Nach dem Übergang der Schadstoffe in der Kolonne 11 wird die Flüssigkeit wieder auf ca. 25°C gekühlt, um sie anschließend zu sammeln und wieder der Absorptionsvorrichtung 5 zuzuführen. Die nunmehr belastete Prozessluft kann unmittelbar der thermischen Behandlungsvorrichtung 3 zugeführt werden.

Wie aus der Figur 3 ersichtlich, können die Desorptionsvorrichtungen 7 in räumliche Nähe zu den thermischen Behandlungsvorrichtungen 3 angeordnet werden. Dies ist vorteilhaft, da die Flüssigkeit von der Absorptionsvorrichtung 5 zur Desorptionsvorrichtung 7 mittels vergleichweise dünner Flüssigkeitsleitungen mit beispielsweise einem Normdurchmesser DN 40 oder DN 50 anstelle von lüftungstechnischen Rohrleitungen mit 600 - 900 mm Durchmesser geleitet werden kann. Es ist somit möglich, Absorptions- und Desorptionsstufe räumlich zu trennen und somit die einzelnen Stufen einfach in eine bereits bestehende Lackieranlage zu integrieren. Das Vorsehen mehrerer Desorptionsvorrichtungen 7 in der Nähe der thermischen Behandlungsvorrichtungen 3 hat zudem den Vorteil, dass die thermischen Behandlungsvorrichtungen 3, die üblicherweise 10 bis 20 % höhere Volumenströme verarbeiten können als im Normalbetrieb, durch die zusätzlichen Volumenströme aus der jeweiligen Desorptionsvorrichtung 7 besser ausgelastet werden können. Dies hat den weiteren Vorteil, dass für die thermische Behandlung der Abluftströme aus den Lackiereinheiten 1 keine zusätzlichen thermischen Behandlungsvorrichtungen vorgesehen werden müssen, da die anfallenden Abluftströme über die bereits vorhandenen thermischen Behandlungsvorrichtungen 3 der Trocknungseinheiten 2 behandelt werden können. Dies hat zum einen geringere Investitionskosten bei der Installation einer erfindungsgemäßen Reinigungsanordnung zur Folge, als auch geringere Energiekosten im späteren Betrieb der Anordnung. Es ist somit eine äußerst effiziente Reinigung von Abluftströmen bei gleichzeitig geringem Energieeinsatz als auch geringen Installationskosten möglich.

In einer beispielhaften Lackieranlage mit einem Volumenstrom von ca. 130.000 Bm³/h und einer Belastung mit flüchtigen organischen Verbindungen von ca. 130 mg/Bm³ können pro Betriebsjahr etwa 75 % der Energiekosten durch die vorgeschlagene Erfindung im Vergleich zum Stand der Technik eingespart werden. Zudem kann durch die hohe Effizienz der Erfindung die jährliche CO₂ -Emission der Abluftreinigung um etwa 80 %, verglichen mit dem Stand der Technik, reduziert werden.

Aufgrund der räumlichen Trennung von Absorption und Desorption kann abweichend von Figur 3 beispielsweise auch nur eine Desorptionsvorrichtung 7 vorgesehen sein, die ihre hoch mit Schadstoffen belastete Prozessluft an eine zentrale oder mehrere thermische Behandlungsvorrichtungen 3 zur thermischen Behandlung der Prozessluft abgibt. Auch können abweichend von Figur 3 mehrere Absorptionsvorrichtungen 5 vorgesehen sein, die jeweils mit einer oder mehreren Lackiereinheiten 1, als auch mit einer oder mehreren Desorptionsvorrichtungen 7 wirkverbunden sein können. Die Trennung von Absorption und Desorption ermöglicht eine größtmögliche Flexibilität hinsichtlich der individuellen Ausgestaltung der Anordnung und erlaubt somit eine bedarfsgerechte Anpassung auch an bereits bestehende Lackieranlagen.

Es ist selbstverständlich, dass die vorgehend beschriebene Anordnung zur Reinigung von Gasströmen einer Lackieranlage nicht auf die vorgehend beschriebene Verwendung mit Lackieranlagen in der Automobilproduktion beschränkt ist. Vielmehr kann die erfindungsgemäße Anordnung ganz allgemein mit sämtlichen Lackieranlagen verwendet werden, die über zumindest eine thermische Behandlungsvorrichtung verfügen.

### Bezugszeichenliste

- 1: Lackiereinheit
- 2: Trocknungseinheit
- 3: thermische Behandlungsvorrichtung
- 4: Adsorptionsrad
- 5: Absorptionsvorrichtung
- 6: Desorptionsvorrichtung
- 7: Desorptionsvorrichtung
- 11: Kolonne
- 12: Wärmetauscher
- 13: Wärmetauscher
- 14: Wärmetauscher
- 15: erster Prozesstank
- 16: zweiter Prozesstank

## Patentansprüche

1. Verfahren zur Reinigung von Gasströmen einer Lackieranordnung mit
zumindest einer Lackiereinheit (1),
zumindest einer der Lackiereinheit (1) nachgeschalteten Trocknungseinheit (2) und zumindest einer der Trocknungseinheit (2) nachgeschalteten thermischen Behandlungsvorrichtung (3) zur thermischen Behandlung von Gasströmen der zumindest einen Trocknungseinheit (2),
einer Absorptionsvorrichtung (5), und
zumindest einer Desorptionsvorrichtung (7), wobei die zumindest eine Desorptionsvorrichtung (7) jeweils zumindest einer der Trocknungseinheit (2) nachgeschalteten thermischen Behandlungsvorrichtung (3) zugeordnet ist,
mit den Schritten:
Einleiten von Gasströmen der zumindest einen Lackiereinheit (1) in die Absorptionsvorrichtung (5);
Abtrennen von flüchtigen Bestandteilen der Gasströme in der Absorptionsvorrichtung (5) mittels Lösen in einer Flüssigkeit;
Abtrennen von in der Flüssigkeit gelösten Bestandteilen in der zumindest einenDesorptionsvorrichtung (7); und
Zuführen der aus der Flüssigkeit abgetrennten Bestandteile zu jeweils einer der Desorptionsvorrichtung (7) zugeordneten thermischen Behandlungsvorrichtung (3) zur thermischen Behandlung.

2. Verfahren nach Anspruch 1, wobei die Flüssigkeit nach dem Abtrennen der gelösten Bestandteile wieder der Absorptionsvorrichtung zugeführt wird.

3. Verfahren nach Anspruch 1 oder 2, **dadurch gekennzeichnet, dass** die Abluftströme der Lackiereinheiten (1) zentral in der Absorptionsvorrichtung (5) gereinigt werden und die belastete Flüssigkeit über Rohrleitungen den Desorptionsvorrichtungen (7) zugeführt wird.

4. Anordnung zur Reinigung von Gasströmen einer Lackieranordnung nach dem Verfahren des Anspruchs 1, die Folgendes umfasst:
- zumindest eine Lackiereinheit (1);
- zumindest eine der Lackiereinheit (1) nachgeschalteten Trocknungseinheit (2);
- zumindest eine der Trocknungseinheit (2) nachgeschaltete thermische Behandlungsvorrichtung (3) zur thermischen Behandlung von Gasströmen der zumindest einen Trocknungseinheit (2);
- eine Absorptionsvorrichtung (5), in welcher Gasströme der zumindest einen Lackiereinheit (1) eingeleitet werden und flüchtige Bestandteilen der Gasströme in der mittels Lösen in einer Flüssigkeit abgetrennt werden; und
- zumindest eine Desorptionsvorrichtung (7), in welcher die in der Flüssigkeit gelösten Bestandteilen abgetrennt werden;
wobei die zumindest eine Desorptionsvorrichtung (7) jeweils zumindest einer der Trocknungseinheit (2) nachgeschalteten thermischen Behandlungsvorrichtung (3) zugeordnet ist, so dass die in der zumindest einen Desorptionsvorrichtung (7) aus der Flüssigkeit abgetrennten Bestandteile der jeweils zugeordneten thermischen Behandlungsvorrichtung (3) zur thermischen Behandlung zugeführt werden können.

5. Anordnung nach Anspruch 4, wobei die Absorptionsvorrichtung (5) zumindest folgendes umfasst:
eine Trägeranordnung mit einer Zufuhr und einem Auslass für die Flüssigkeit,
wobei die Trägeranordnung derart gestaltet ist, dass die Flüssigkeit zwischen Zufuhr und Auslass über eine Anzahl an Trägern geleitet wird und auf der Oberfläche der Träger einen fließenden Flüssigkeitsfilm bildet; und
eine Gasstromführung, die derart gestaltet ist, dass die Gasströme mit dem fließenden Flüssigkeitsfilm auf der Oberfläche der Anzahl an Trägern in Kontakt kommen.

6. Anordnung nach einem der Ansprüche 4 bis 5, wobei die Desorptionsvorrichtung (7)zumindest Folgendes umfasst:
eine Heizanordnung, um die Flüssigkeit und einen weiteren Gasstrom zu erhitzen;
eine Kolonne, um die erhitzte Flüssigkeit mit dem erhitzten weiteren Gasstrom zu kontaktieren; und
Mittel, um die erhitzte Flüssigkeit zu kühlen.

7. Anordnung nach Anspruch 6, wobei der weitere Gasstrom ein Teilstrom des Gasstroms von der zumindest einen Trocknungseinheit zu der thermischen Behandlungsvorrichtung ist.

8. Anordnung nach Anspruch 6, wobei der weitere Gasstrom ein Gasstrom einer Abhitzestrecke der thermischen Behandlungsvorrichtung ist.

## Claims

1. Method for cleaning gas flows of a painting installation, by means of
at least one painting unit (1),
at least one drying unit (2) which is positioned downstream of the painting unit (1), and at least one thermal treatment apparatus (3), which is positioned downstream of the drying unit (2), for the thermal treatment of gas flows of the at least one drying unit (2),
an absorption apparatus (5), and
at least one desorption apparatus (7), wherein the at least one desorption apparatus (7) is assigned to in each case at least one thermal treatment apparatus (3) positioned downstream of the drying unit (2),
having the steps:
introducing gas flows of the at least one painting unit (1) into the absorption apparatus (5);
separating off volatile constituents of the gas flows in the absorption apparatus (5) by means of dissolution in a liquid;
separating off constituents dissolved in the liquid in the at least one desorption apparatus (7); and
supplying the constituents separated off from the liquid to in each case one thermal treatment apparatus (3), assigned to the desorption apparatus (7), for the thermal treatment.

2. Method according to Claim 1, wherein the liquid is, after the separation-off of the dissolved constituents, supplied to the absorption apparatus again.

3. Method according to Claim 1 or 2, **characterized in that** the exhaust-air flows of the painting units (1) are cleaned centrally in the absorption apparatus (5), and the laden liquid is supplied via pipelines to the desorption apparatuses (7).

4. Arrangement for cleaning gas flows of a painting installation in accordance with the method of Claim 1, which arrangement comprises the following:
- at least one painting unit (1),
- at least one drying unit (2) which is positioned downstream of the painting unit (1),
- at least one thermal treatment apparatus (3), which is positioned downstream of the drying unit (2), for the thermal treatment of gas flows of the at least one drying unit (2),
- an absorption apparatus (5), in which gas flows of the at least one painting unit (1) are introduced and volatile constituents of the gas flows are separated off therein by dissolution in a liquid; and
- at least one desorption apparatus (7), in which the constituents dissolved in the liquid are separated off;
wherein the at least one desorption apparatus (7) is assigned to in each case at least one thermal treatment apparatus (3) positioned downstream of the drying unit (2), such that the constituents separated from the liquid in the at least one desorption apparatus (7) can be supplied to the respectively associated thermal treatment apparatus (3) for the thermal treatment.

5. Arrangement according to Claim 4, wherein the absorption apparatus (5) comprises at least the following:
a carrier arrangement with a feed and with an outlet for the liquid,
wherein the carrier arrangement is designed such that the liquid is, between the feed and outlet, conducted over a number of carriers and forms a flowing liquid film on the surface of the carriers; and
a gas flow guide which is designed such that the gas flows come into contact with the flowing liquid film on the surface of the number of carriers.

6. Arrangement according to either of Claims 4 and 5, wherein the desorption apparatus (7) comprises at least the following:
a heating arrangement for heating the liquid and a further gas flow;
a column for bringing the heated liquid into contact with the heated further gas flow; and
means for cooling the heated liquid.

7. Arrangement according to Claim 6, wherein the further gas flow is a partial flow of the gas flow from the at least one drying unit to the thermal treatment apparatus.

8. Arrangement according to Claim 6, wherein the further gas flow is a gas flow of a waste-heat section of the thermal treatment apparatus.

## Revendications

1. Procédé servant à nettoyer des flux de gaz d'un ensemble de mise en peinture comprenant
au moins une unité de mise en peinture (1),
au moins une unité de séchage (2) installée en aval de l'unité de mise en peinture (1) et au moins un dispositif de traitement (3) thermique installé en aval de l'unité de séchage (2) servant au traitement thermique de flux de gaz de l'au moins une unité de séchage (2),
un dispositif d'absorption (5) et
au moins un dispositif de désorption (7), dans lequel l'au moins un dispositif de désorption (7) est associé respectivement à au moins un dispositif de traitement (3) thermique installé en aval de l'unité de séchage (2),
comprenant les étapes consistant à :
introduire des flux de gaz de l'au moins une unité de mise en peinture (1) dans le dispositif d'absorption (5) ;
séparer des composants volatiles des flux de gaz dans le dispositif d'absorption (5) au moyen d'une dissolution dans un liquide ;
séparer des composants dissous dans le liquide dans l'au moins un dispositif de désorption (7) ; et
amener les composants séparés du liquide à respectivement un dispositif de traitement (3) thermique associé à respectivement un dispositif de désorption (7).

2. Procédé selon la revendication 1, dans lequel le liquide est amené à nouveau au dispositif d'absorption après la séparation des composants dissous.

3. Procédé selon la revendication 1 ou 2, **caractérisé en ce que** les flux d'air vicié des unités de mise en peinture (1) sont nettoyés de manière centrale dans le dispositif d'absorption (5) et le liquide souillé est amené aux dispositifs de désorption (7) par l'intermédiaire de canalisations.

4. Ensemble servant à nettoyer des flux de gaz d'un ensemble de mise en peinture selon le procédé de la revendication 1, qui comprend ce qui suit :
- au moins une unité de mise en peinture (1) ;
- au moins une unité de séchage (2) installée en aval de l'unité de mise en peinture (1) ;
- au moins un dispositif de traitement (3) thermique installé en aval de l'unité de séchage (2) servant au traitement thermique de flux de gaz de l'au moins une unité de séchage (2) ;
- un dispositif d'absorption (5), dans lequel des flux de gaz de l'au moins une unité de mise en peinture (1) sont introduits et des composants volatiles des flux de gaz sont séparés au moyen d'une dissolution dans un liquide ; et
- au moins un dispositif de désorption (7), dans lequel les composants dissous dans le liquide sont séparés ;
dans lequel l'au moins un dispositif de désorption (7) est associé respectivement à au moins un dispositif de traitement (3) thermique installé en aval de l'unité de séchage (2) de sorte que les composants séparés du liquide dans l'au moins un dispositif de désorption (7) peuvent être amenés au dispositif de traitement (3) thermique respectivement associé aux fins du traitement thermique.

5. Ensemble selon la revendication 4, dans lequel le dispositif d'absorption (5) comprend au moins ce qui suit :
un ensemble de supports comprenant une amenée et une évacuation pour le liquide,
dans lequel l'ensemble de supports est configuré de telle manière que le liquide est acheminé entre l'amenée et l'évacuation par l'intermédiaire d'un nombre donné de supports et forme à la surface des supports un film de liquide en écoulement ; et
un système de guidage de flux de gaz, qui est configuré de telle manière que les flux de gaz viennent en contact avec le film de liquide en écoulement à la surface du nombre donné de supports.

6. Ensemble selon l'une quelconque des revendications 4 à 5, dans lequel le dispositif de désorption (7) comprend au moins ce qui suit :
un ensemble de chauffage afin de réchauffer le liquide et un autre flux de gaz ;
une colonne afin d'établir un contact entre le liquide réchauffé et l'autre flux de gaz réchauffé ; et
des moyens afin de refroidir le liquide réchauffé.

7. Ensemble selon la revendication 6, dans lequel l'autre flux de gaz est un flux partiel de flux de gaz depuis l'au moins une unité de séchage vers le dispositif de traitement thermique.

8. Ensemble selon la revendication 6, dans lequel l'autre flux de gaz est un flux de gaz d'une ligne de chaleur perdue du dispositif de traitement thermique.
